Europäisches Patentamt

European Patent Office

Office européen des brevets

(11) Publication number: **0 417 969 A2**

# EUROPEAN PATENT APPLICATION

(21) Application number: 90309716.0

(22) Date of filing: 05.09.90

(51) Int. Cl.⁵: **G11B 23/087**, G11B 23/107, G11B 23/027, G11B 23/04

(30) Priority: 11.09.89 CN 89106945

(43) Date of publication of application:
20.03.91 Bulletin 91/12

(84) Designated Contracting States:
**DE FR GB IT NL**

(71) Applicant: **Zhang, Li**
**No 53, Building 29, Dong Guang Road**

**Chaoyang District, Beijing(CN)**

(72) Inventor: **Zhang, Li**
**No 53, Building 29, Dong Guang Road**
**Chaoyang District, Beijing(CN)**

(74) Representative: **Stoner, Gerard Patrick et al**
**Mewburn Ellis 2 Cursitor Street**
**GB-London EC4A 1BQ(GB)**

(54) Tape system.

(57) A tape reel for a cassette tape is provided in a small cartridge (1), removably insertable in an outer cassette (3,4) of standard shape and size. The cartridge (1) has a drive hole and locates over the corresponding drive hole (9) in the outer cassette. A header strip (14) of the tape can be pulled out through an exit hole (13) in the cartridge and fitted through a loading groove (6) of the outer cassette for attachment to a take-up reel (8).

FIG·5

FIG·1

## TAPE SYSTEM

The present invention generally relates to a tape system having container comprising two levels of tape containers, particularly to a tape application system comprising a single reel tape within a thin-shell container, i.e. a shell tape, and an adaptive cassette, i.e. open cassette to hold the shell tape loaded for using on a cassette tape recorder or a cassette tape player.

At present, the known tape cassette of the international standard, as a widely adopted appliance of popular culture, entertainment and life has been found some unsatisfactory defects. For example, people have to use standard tape cassette as an individual unit for communication with its substantially equal weight and identical volume, regardless of its usage and its recording period, which causes inconveniences in mailing, archiving, carrying and storage, and thereby limits the application of tapes. The use of microcassette tapes and recorders in recent years has not changed this state fundamentally. Furthermore, the two kinds of cassette tape systems are independent of and incompatible with each other.

The object of the present invention is to provide a new tape system comprising a single reel tape with container, which serves as an individual unit for communication and which both satisfies practical uses and appears in minimum and simplest package, and an adaptive cassette for conveniently using said tape on a standard cassette tape recorder or player.

Aspects of the invention are set out in the claims. In a preferred aspect, the technical scheme for implementing the present invention is to provide a tape system comprising a single reel tape with a thin-shell casing, i.e. shell tape, and a adaptive cassette, i.e. open cassette, for holding said shell tape for use on a cassette tape recorder. Said shell tape adopts a shell structure, which comprises a container lower assembly, a container upper assembly, and a tape reel. The container lower assembly is a thin substrate with a drive hold on which there is at least one convex positioning key. Said container upper assembly is a thin convex shell with a drive hole and a tape outlet on its side wall. The tape reel is contained in between the substrate and the convex shell which form a flange in their joint portion. There is at least one hole on the external header of the tape reel. The internal wall of the shell formed by the substrate and the convex shell is smooth and without any projections restricting the radial movement of the reel. The external tape header is naturally withdrawn within the shell when the tape is not in use, meanwhile the reel can move freely in the radial direction. Said open cassette comprises a cassette substrate with a tape guiding mechanism and a tape cabin conforming to the operational structure of international standard tape cassette, and a tape cabin conforming to the operational structure of international standard tape cassette, and a tape cabin cover having a drive hole and operative to be opened and closed. On the substrate of the open cassette, there is provided on the same side with the cabin cover a protecting cover for the tape guiding mechanism, which compressively covers the left and right guide rollers, magnetic shielding plate, and a felt pad spring cover. Along the side of said tape guiding mechanism protecting cover near the left and right sides of the tape guiding path and facing the tape window, there is provided an outwardly exposed groove between the protecting cover and adjacent substrate and tape window, the two ends of which are extended to the left and right regions of the tape cabin and used for loading the head leader of the tape, the whole groove is C-shaped surrounding the tape guiding mechanism on three sides. A tape take-up wheel with a tape hook is provided on the position of said drive hole in one of the tape cabin regions. While at least one positioning keyseat is provided on the tape hub guid ring projected round the drive hole of the other cabine region.

The preferred construction has the following advantages as compared with the prior art:

1. The shell tape adopts shell structure, which is smal in size, light in weight, and thin in thickness. The volume of the shell is only e.g. one tenth of that of a standard tape cassette, or half of that of a micro-tape cassette.

2. Easy to operate: since the open cassette adopts a C-shaped loading groove and hook-on take-up wheel and since the shell tape adopts tape header with orifices, it is simple and convenient to load and take off said shell tape, tape taking-off is operated by the automatic hooking-off and withdrawal into the shell by the moment of inertia of the fast forward or rewinding operation of the recorder.

3. High versatility: due to adopting the tape hub guide ring keyseat and guidering convex positioning key to position the shell tape, the shell tape can be made in different sizes, various styles both with graceful appearance according to time periods and patterns, all of which shell tapes may be insertable into the same open cassette.

4. Extended scope of tape application; Since it is light in weight, small in size, thin and inexpensive and since it has shell flange and a magnetic shielding shell, the shell tape can be mailed by enclosing it in an envelope or mounting it on a postcard; it can be stuck on archives for storage or inserted in clip-on sheets for collection; it can also be on pictures, greeting cards or in books for sale.

5. Easy to produce and a low cost of raw material and other production expenses; when there is no projected object on the smooth inner surface of the tape shell, sheet materials can be used to produce said shell, the cost is thus reduced. Furthermore, the tape reel can move freely along the radial direction within the shell to facilitate the clipping of the tape end on the hub of the reel at the tape outlet, thus making possible the winding of tape in the later stage of manufacturing and facilitating meass production.

Embodiments are now described by way of example. In the drawings:

Fig. 1 is an exploded diagram of a shell tape;

Fig. 2 is a sectional view of the shell tape;

Fig. 3 is the front view of the shell tape;

Fig. 4 is the bottom view of the shell tape;

Fig. 5 is a front perspective view of an outer cassette with the cover opened;

Fig. 6 is a perspective view of a tape take-up wheel and an embedding ring;

Fig. 7 is a back perspective view of the outer cassette; Fig. 8 is a front perspective view of a mask-type open cassette with the cover opened; and

Fig. 9 is a perspective view of the outer cassette provided with retaining means for the tape take-up wheel with the cover opened.

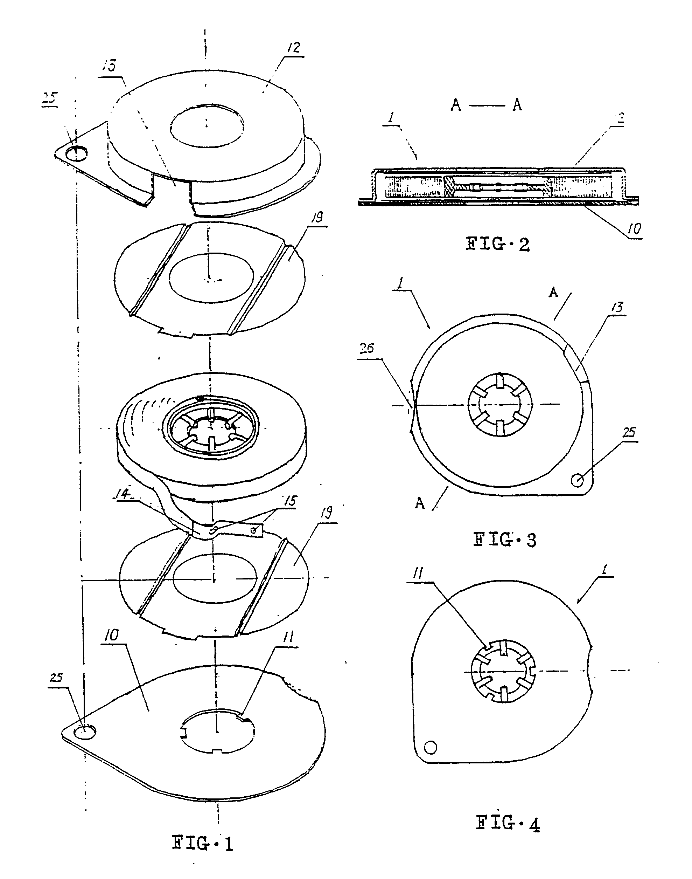

Figs. 1 to 4 illustrate an embodiment of the shell tape or cartridge. The lower assembly of the container of shell tape (1) is a thin substrate (10) with a drive hole on which there are three projected convex positioning keys (11). The upper assembly is a thin convex shell (12) with a drive hole and tape outlet (13) in the side wall. The tape reel is placed in the space between substrate (10) and convex shell (12) the joint edges of which form a circular flange with a lobe. The outer end of the tape reel withdrawn in the shell is a section of plastic film (14) having a bending fold, in which there are two orifices (15) for hooking and conneting the tape. One of the orifices is elongated in the longitudinal direction of the tape for connecting the tape on the hook, while the other orifice is circular and used for hooking out the tape head from the shell. The inner wall of the shell is smooth and without any projected elements restricting the reel from moving freely in the radial direction, so the tape reel can move freely in the radial direction within the shell, the movement is restrained only by the wall of the shell. Lubricating layers (19) are provided inbetween the tape reel and substrate (10) and convex shell (12). When the hub is rotated clockwise by e.g. a finger through the drive hole of the shell (12) and when the tape reel is being moved toward the exit (13) as close as possible, the plastic film (14) will spring out of the outlet (13) as it passes by there, so that the tape head leader can be pulled out by holding the plastic film (14). A round hole (25) in the flange lobe of the shell tape as illustrated in Figs. 1, 3 and 4 is used for holding and hanging the shell tape. In addition there is an arcuate recess (26) in the flange towards the tape take-up wheel for increasing the clearance between the tape shell and taken-up tape on the tape take-up reel.

There are various implementations of the shell tape. The circumference of the flange of the casing may be circular, rectangular, triangular, or the combination of any of these shapes, there can be recesses or holes on the flange, which can be substituted for positioning lugs (11) to position the shell. Nevertheless, there may be no flange at the joint portion between substrate (10) and the convex shell (12). The outline of the plane of the convex portion of the convex shell (12) (the upper assembly of the container) can be circular, or rectangular, or triangular, or any combination of these shapes. A thin convex shell having a convex positioning key (11) can be used as the lower assembly of the container instead of the substrate (10) to connect with the convex shell (12). The external head leader of the tape reel of shell tape (1) can be a section of plastic film with or without bending fold, there may be no plastic film on the head leader, but preferably at least a hole and at least a hole elongated in the longitudinal direction of the tape, these holes can be used for pulling out the head leader from the shell with auxiliary tool in addition to hooking the tape on the tape take-up wheel. There can be a tape axle guide ring projected around the drive hole on the inner surface of the substrate (10) or convex shell (12), and the guide ring can be discontinuous for the purpose of clipping the lubricating pad or in consideration of simplifying the manufacturing process. The inner surface of the shell may be coated with a lubricating layer instead of having lubricating pads between the tape reel and the substrate or convex shell. The substrate (10) and convex shell (12) of the shell tape (1) can be made of metallic or plastic materials, or composite materials of metals and plastics, as well as composite materials of papers or rosins with fibres. The substrate (10) and convex shell (12) can be made of either the same or different materials. The joining of the substrate with the convex shell has the option of various processes according to the materials selected for manufacturing, for example, welding, sticking, hot pressing, shove joint, edge joint, etc.

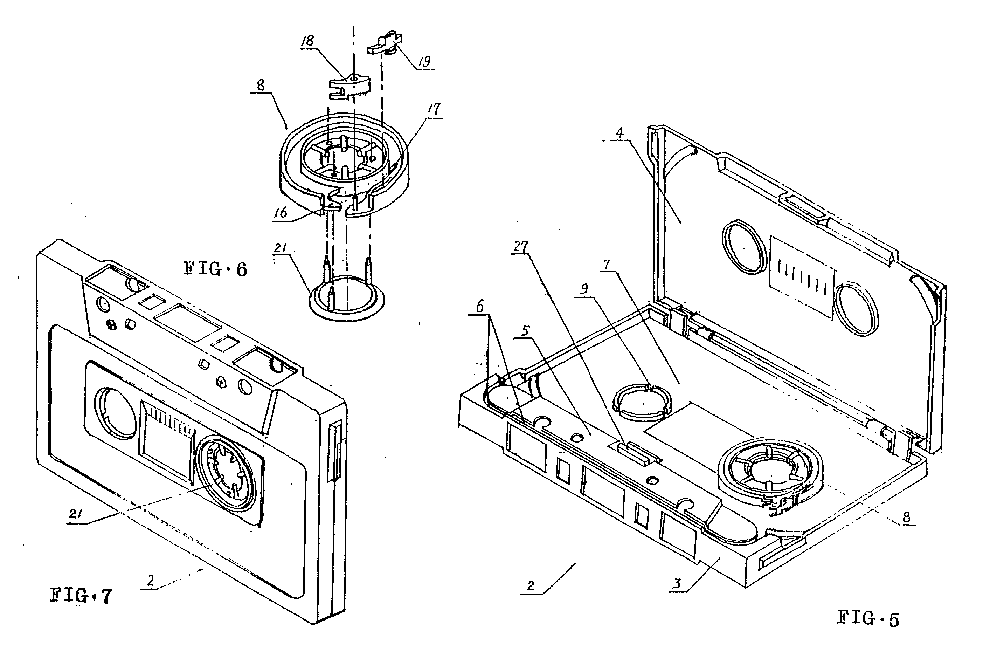

Fig. 5 illustrates a preferred embodiment of an outer cassette. It comprises a substrate (3) mainly including a tape guiding mechanism and a tape cabin (7). and tape cabin cover (4) having a drive axle hole and operative to be opened and closed. There is a tape guiding mechanism protecting cover (5) provided on the same side as the cabin cover (4), near the substrate region confined by the two outside semicircles corresponding to the left and right tape guiding rollers, which compressively covers the left and right tape guiding rollers, the magnetic shielding plate, and the felt pad spring cover. Along the side of the protecting cover near the left semicircle of the tape guiding path and towards the tape window and the right semicircle side, there is an outwardly exposed tape loading groove (6) positioned between the protecting cover and adjacent substrate and the tape window, and the two ends of the groove are extended to the left and right regions of the tape cabin respectively. The whole groove surrounds the protecting cover on the sides, forming a "C" shape. A tape take-up wheel (8) with a tape hook is provided at the position of the drive hole of one region of the tape cabin (7); there are three spaced positioning key seats (9) provided on the tape axle guide ring projected around the drive hole of the other region of the tape cabin. The tape take-up wheel (8) is connected to and held against the tape axle guide ring by an embedding ring (21) having three supporting legs and inserted in the recess of drive axle hole on the back of the tape cassette. The edge of the protecting cover (5) on the side of the tape cabin contacts with the edge of the tape cabin cover (4) taking the edge of the safety lug side of substrate (3) as its opening axis. The tape cabin cover locking means (27) is in the middle of the contacting edge of the protecting cover and the cabin cover. The protecting cover (5) , tape cabin cover (4), and tape loading groove (6) constitute the main portion of the front surface of tape cassette (2). And the protecting cover (5) reserves the positioning holes, tape driving axle holes as well as the raised portion on corresponding regions as those of the standard tape cassette.

Fig. 6 illustrates the tape take-up wheel (8) and the embedding ring (21). A hook or stub (16) capable of being inserted into the orifice in the header of the tape is provided on the tape take-up wheel; there is a guiding slot (17) for inserting the tape extending along the inwardly inclined direction of the hook (16); a hook locking means (18) having an axle and openable outwardly is interleavingly positioned under the surface for winding the tape with hook (16); and a locking pin (19) is provided at the end of the locking means (18). The locking means can not be opened when the locking pin (19) is pushed toward the the locking means (18).

The embedding ring (21) comprises three supporting legs which are aligned with three holes of the driving stub gear of the tape take-up wheel respectively, and the embedding ring is riveted on the tape take-up wheel.

The foregoing embodiment has constituted an operable shell tape system. While in operation, the user opens the cabin cover of the open cassette in the direction as illustrated in Fig. 5, places the shell tape with the head leader being pulled out into the tape cabin with the positioning indicator aligned to case the drive hole of the shell substrate on the tape driving axle guiding ring of the tape cabin and embeds the projected positioning key into the positioning key seat of the guide ring. Meanwhile, the tape hub inside the shell is also being cased on the tape axle guide ring, the tape hub of the shell tape is then pressed with the thumb of the right hand to provide the head leader with certain pulling force, the front portion of the head leader is pulled into the tape loading groove with the left hand, and the head leader is pressed into the groove with the forefinger of the right hand following the left hand along the groove. After the head leader has fully entered the groove, the hook locking means is opened and the tape take-up wheel is held with the right hand, the end of the head leader is inserted into the head leader slot with the left hand, which is pulled back to hook the orifice onto the hook after the header of the head leader has reached the end of the slot, then the hook locking means is locked. If automatic withdrawal of the tape is undesired, the locking pin can be pushed toward the hook locking means. Finally, the operation is completed with the closing of the cabin cover.

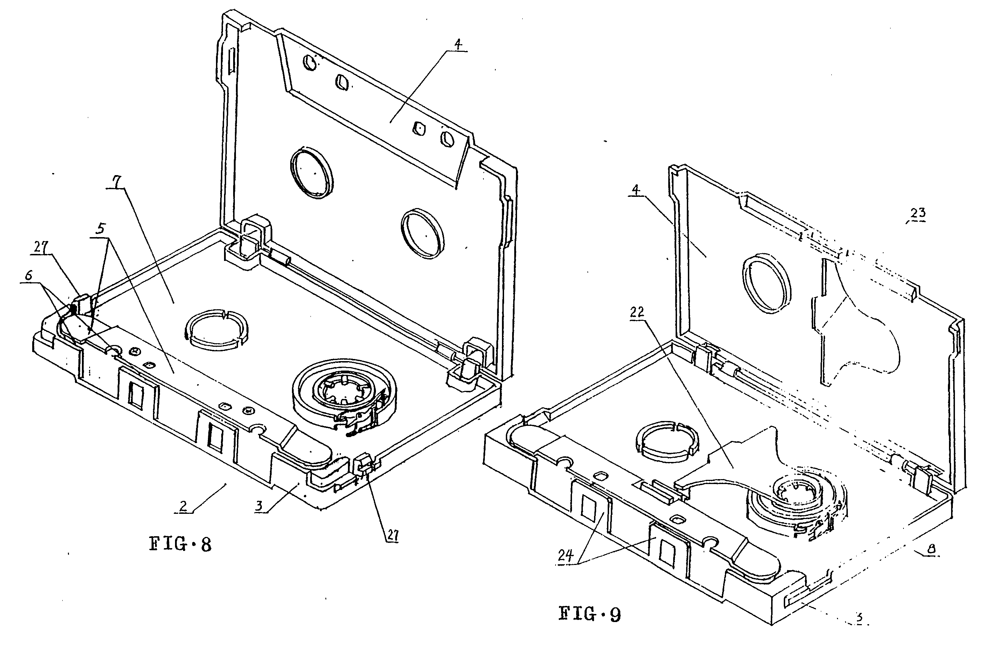

Fig. 7 illustrates a back perspective view of the tape cassette of Fig. 5, showing the embedding ring (21) embedded in the recess of the inclined surface of the drive hole on the back of the cassette, as well as two screws for fixing the protecting cover from the back of the substrate can be seen from the drawing.

Fig. 8 illustrates another embodiment of the outer cassette, wherein, the cabin cover (4) with the edge on the side of the safety lugs of substrate (3) as its opening axis constitutes the whole of the front surface of the tape cassette (2), while protecting cover (5) and tape loading grcove (6) are covered by the closed cabin cover (4), the cabin cover locking means (27) are positioned in the middle of the guide ribs on both sides of the cassette (2), and the tape receiving wheel (8) is pulled against the tape axle guide ring of the tape cabin (7) by means of the embedded ring.

Fig. 9 illustrates still another embodiment of the open cassette, wherein the tape receiving wheel (8) is mounted by means of a compressing tongue, a compressing tongue frame (22) having drive hole and tape axle guide ring is fixed on the substrate, which extends from the central portion of the tape cabin and compresses the tape receiving wheel against the tape axle guide ring of the tape cabin, a window (23) having the same shape as that of the compressing tongue frame (22) of the tape receiving wheel is provided in the cabin cover (4). The tape window portion of the substrate (3) in the figure is different from that in Fig.5, the two window rims being connected with the substrate on one side instead of on two sides, thus forming a tape window having two tongue shaped rims (24) This modification of the embodiment does not affect the existence and integrity of the C-shaped tape loading groove (6).

The cabin cover (4) of the open cassette illustrated in Figs. 5, 7, 8 and 9 can take any one of the three edges of the other three sides as its opening axis, the axial connection of the cabin cover (4) with the substrate (3) can be in various forms, e.g. joint axle, hinge, flexible connection, etc.. There are two alternatives to mount the tape take-up wheel, if the compressing tongue method is selected, the compressing tongue frame (22) can be arranged to extend over the tape take-up wheel from various directions, the circumference of the surface of the tongue frame (22) facing the cabin cover (4) can be of various shapes, while the shape of the tongue frame in Fig.9 is of the graceful shape of a space shuttle. The cabin cover (4) is provided with a tongue frame window (23) or recess of the same shape on the corresponding position, tape windows on the substrate in form of the tongue rim (24) are adaptive for any type of open cassette. The protecting cover (5) of the tape guiding mechanism can be a portion of the tape guiding mechanism body, and the tape take-up wheel (8) and the embedding ring (21) can be in integrated form.

## Claims

1. A tape system, comprising an outer cassette (3,4) for insertion in a tape recorder and/or player, with mounting locations for mounting tape reels rotatably within the cassette (3,4), guide means defining a guided tape path between such tape reels, and access whereby a rotating drive of the recorder and/or player can drive the tape in use from outside the cassette, characterised in that a first such tape reel is contained in the casing (10,12) of a separate cartridge (1) which is removably insertable in the cassette (3,4) to an installed condition in which the first tape reel is aligned with a said mounting location (9) in the cassette (3,4), said cartridge casing (10,12) having a tape exit (13) for passage of tape from the first tape reel, and the cassette having a tape loading guide (5,6) for guiding tape drawn from the cartridge (1), upon insertion thereof in the cassette, into the tape path.

2. A tape system with a two-part tape container, comprising:
a. a single tape reel having container called shell tape, said single tape reel container includes:
at least two parallel planar surfaces, having axle 25 holes and at least one side wall thereon, said at least one side wall having a tape outlet;
a tape reel within said single tape reel container with its header withdrawn in any angular position within the container, said tape header is operative to spring out of or to be exposed at said tape outlet by rotating the tape axle and to be further pulled out for use;
said single tape reel container adopts shell structure; and
b. an adaptive cassette (referred to as open cassette) used in a cassette recorder or cassette player for holding said single reel tape in particular, said shell tape. Said adaptive cassette is a non-self-driven tape interfacing container having a pair of driving axle holes, and includes:
a tape guiding mechanism and a double-drive-hole tape cabin, and a cassette substrate constituted of said tape guiding mechanism and said tape cabin as its main body;
a tape cabin cover that can be opened and closed, and has double-drive-hole;
a tape guiding mechanism protecting cover on said cassette substrate positioned on the same side as said tape cassette cover;
a tape loading groove along the edge on the side adjacent to the tape guiding path of said protecting cover, which is outwardly exposed and connected with the left and right regions of said tape cabin on both ends.

3 . A tape system having container according to claim 1, wherein, said single tape reel container is machine-shaped from sheet materials, and formed by combining a thin convex shell upper assembly with a thin substrate lower assembly or two thin convex shell assemblies.

4. A tape system having container according to claim 1, wherein, the inner wall and outer wall of said single tape reel container are parallel to each other, said tape reel placed in said container is free to move along the radial direction within the shell.

5. A single tape reel container according to claim 3, wherein, the connecting portion of the upper and lower assemblies forms a flange.

6. A tape system having container according to claim 1, wherein, the external header of the head leader of the tape of said tape reel is elastic and has a bending fold and an orifice for hooking on the tape receiving wheel.

7. A tape system having container according to claim 1, wherein, said tape guiding mechanism protecting cover of said adaptive cassette covers the tape guiding mechanism near the region of the substrate confined by the two outside semicircles corresponding to the left and right tape guiding rollers positioned at the two ends of said tape guiding mechanism, and said tape loading groove surrounds said protecting cover from three sides forming a "C" shape.

8. A tape system having container according to claim 1, wherein, a tape take-up wheel having a tape hook means is provided at the position of a drive hole of of the tape cabin of said adaptive cassette; said tape take-up wheel has at least one hook or stub element operable to hook the hole in the header of the head leader and a guiding crevice for inserting the tape, said tape take-up wheel is fixed in position by a compressing tongue frame or an embedding ring on the back of the tape cabin, a window or recess of the same shape as said compressing tongue frame is provided on the cabin cover.

9 . A tape system having container according to claim 1, wherein, in the tape cabin of said adaptive cassette, the tape axle guide ring has at least one positioning keyseat, the tape window of the cassette substrate is formed by a tongue shaped rim. The tape guiding mechanism protecting cover can be integrated with the tape guiding mechanism, and constitutes a portion of the tape guiding mechanism body.

10. A tape system having container according to claim 1, wherein, the edge of said tape guiding mechanism protecting cover of said adaptive cassette adjacent to the tape cabin is the contacting edge of the tape cabin cover with any one of the four edges of the assette substrate as its opening axis, the exposed tape guiding mechanism protecting cover and the tape loading groove are the constituting portions of the front surface of the cassette.

11. A tape system having container according to claim 1, wherein, the tape cabin cover of said adaptive cassette with any one of the four edges of the cassette substrate as its opening axis is the major portion or whole of the front surface of the cassette, the closed cabin cover covers the tape guiding mechanism protecting cover and the tape loading groove.

FIG·1

A — A

FIG·2

FIG·3

FIG·4

FIG·5

FIG·6

FIG·7

FIG·8

FIG·9

EP 0 417 969 A2